(19) Europäisches Patentamt
European Patent Office
Office européen des brevets

(11) Veröffentlichungsnummer: **0 168 704**
**B1**

(12) # EUROPÄISCHE PATENTSCHRIFT

(45) Veröffentlichungstag der Patentschrift: **22.06.88**

(51) Int. Cl.⁴: **C 07 F 9/65**, A 01 N 57/16

(21) Anmeldenummer: **85108118.2**

(22) Anmeldetag: **29.06.85**

(54) **Pyrimidinyl-thionophosphorsäureester.**

(30) Priorität: **14.07.84 DE 3426007**

(43) Veröffentlichungstag der Anmeldung: **22.01.86 Patentblatt 86/4**

(45) Bekanntmachung des Hinweises auf die Patenterteilung: **22.06.88 Patentblatt 88/25**

(84) Benannte Vertragsstaaten: **BE CH DE FR GB IT LI NL**

(56) Entgegenhaltungen:
**DE - A - 2 415 058**
**DE - A - 2 507 702**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Maurer, Fritz, Dr., Roeberstrasse 8, D-5600 Wuppertal 1 (DE)**
Erfinder: **Becker, Benedikt, Dr., Metzkausener Strasse 14, D-4020 Mettmann (DE)**
Erfinder: **Homeyer, Bernhard, Dr., Obere Strasse 28, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 168 704 B1

**Beschreibung**

Die Erfindung betrifft neue Pyrimidin-2-yl-thionophosphorsäureester, ein Verfahren zu ihrer Herstellung und ihre Verwendung in Schädlingsbekämpfungsmitteln, insbesondere als Insektizide und Nematizide.

Es ist bekannt, dass bestimmte Thionophosphorsäure-ester bzw. -esteramide, wie z.B.
O,O-Diethyl-O-(pyrimidin-2-yl)-,
O-Ethyl-O-n-propyl-O-(pyrimidin-2-yl)- und
O-Ethyl-O-n-propyl-O-(5-brom-pyrimidin-2-yl)-thionophosphorsäureester
insektizid wirksam sind (vergl. DE-OS 2 415 058, DE-OS 2 507 702, US-PS 3 741 968 und CH-PS 546 259).

Die Wirkung und die Wirkungsdauer dieser Verbindungen sind jedoch, insbesondere bei bestimmten Insekten, nicht immer voll zufriedenstellend.

Es wurden nun neue Pyrimidin-2-yl-thionophosphorsäureester der Formel (I) gefunden,

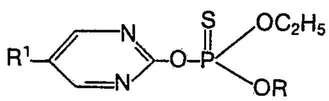

(I)

in welcher
R für i-Propyl oder sec.-Butyl steht und
$R^1$ für Wasserstoff oder Halogen steht.

Weiterhin wurde gefunden, dass man die neuen Pyrimidin-2-yl-thionophosphorsäureester der Formel (I) erhält, wenn man 2-Hydroxypyrimidine der Formel (II),

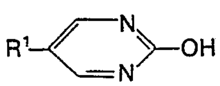

(II)

in welcher
$R^1$ die oben angegebene Bedeutung hat,
oder die entsprechenden Alkalimetall-, Erdalkalimetall- oder Ammoniumsalze mit Halogeniden der Formel (III),

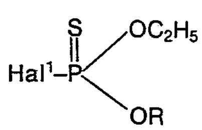

(III)

in welcher
R die oben angegebene Bedeutung hat und
$Hal^1$ für Halogen, wie Chlor oder Brom steht,
gegebenenfalls in Gegenwart eines Säureakzeptors und gegebenenfalls in Gegenwart eines Verdünnungsmittels umsetzt.

Die neuen Pyrimidin-2-yl-thionophosphorsäureester der Formel (I) zeichnen sich in überragender Weise durch eine besonders hohe und lange Wirksamkeit als Schädlingsbekämpfungsmittel, insbesondere als Insektizide und Nematizide aus.

Die Erfindung betrifft vorzugsweise Verbindungen der Formel (I), in welcher
R für i-Propyl oder sec.-Butyl steht und
$R^1$ für Wasserstoff, Fluor, Chlor oder Brom steht.

Besonders bevorzugt sind die Verbindungen der Formel (I), in welcher
R für i-Propyl oder sec.-Butyl steht und
$R^1$ für Wasserstoff, Fluor oder Brom steht.

Verwendet man beispielsweise für das erfindungsgemässe Verfahren O-Ethyl-O-i-propyl-thionophosphorsäurediesterchlorid und 2-Hydroxypyrimidin als Ausgangsstoffe, so kann die entsprechende Reaktion durch das folgende Formelschema skizziert werden:

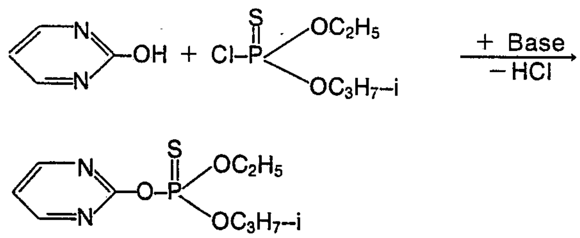


Die beim erfindungsgemässen Verfahren als Ausgangsstoffe für die Herstellung der neuen Verbindungen der Formel (I) einzusetzenden 2-Hydroxypyrimidine bzw. die entsprechenden Alkalimetall-, Erdalkalimetall- oder Ammoniumsalze sind durch die Formel (II) definiert. In dieser Formel steht $R^1$ für diejenigen Reste, welche oben bei der Definition der Formel (I) angegeben sind. Als Alkali- oder Erdalkalimetallsalze werden vorzugsweise die Natrium-, Kalium- oder Calciumsalze eingesetzt.

Die Verbindungen der Formel (II) sind bekannt und/oder können nach allgemein bekannten Verfahren und Methoden hergestellt werden (vergl. z.B. DE-OS 2 507 702 und US-PS 3 741 968).

Als Beispiele für die Verbindungen der Formel (II) seien genannt:

2-Hydroxy-pyrimidin, 5-Fluor-, 5-Chlor- und 5-Brom-2-hydroxy-pyrimidin bzw. die entsprechenden Natrium-, Kalium-, Calcium- und Ammoniumsalze.

Die ausserdem als Ausgangsstoffe einzusetzenden Halogenide sind durch die Formel (III) definiert. In dieser Formel steht R für diejenigen Reste, welche bei der Definition in Formel (I) angegeben sind. $Hal^1$ steht in dieser Formel für Halogen, wie insbesondere Chlor oder Brom.

Die Verbindungen der Formel (III) sind bekannt.

Als Beispiele für die Halogenide der Formel (III) seien genannt: O-Ethyl-O-i-propyl- und O-Ethyl-O-sec.-butyl-thionophosphorsäureester-chlorid bzw. -bromid.

Das erfindungsgemässe Verfahren zur Herstellung der neuen Pyrimidin-2-yl-thionophosphorsäureester der Formel (I) wird bevorzugt unter Verwendung von Verdünnungsmitteln durchgeführt. Als Verdünnungsmittel kommen praktisch alle inerten organischen Lösungsmittel in Frage.

Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol, o-Dichlorbenzol, Ether wie Diethyl- und Dibutylether, Glycoldimethylether und Diglycoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B. Acetonitril und Propionitril, Amide, wie z.B. Dimethylformamid, Dimethylacetamid und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, Alkalihydride, wie Natriumhydrid, ferner aliphatische, aromatische oder heterocyclische Amine, beispielsweise Triethylamin, Trimethylamin, Dimethylanilin, Dimethylbenzylamin und Pyridin.

Das erfindungsgemässe Verfahren wird im allgemeinen bei Temperaturen zwischen 0°C und 100°C durchgeführt. Bevorzugt wird der Bereich zwischen 20°C und 80°C. Die Umsetzungen werden im allgemeinen bei Normaldruck durchgeführt.

Zur Durchführung des erfindungsgemässen Verfahrens werden die Ausgangsstoffe gewöhnlich annähernd in äquimolaren Mengen eingesetzt. Ein Überschuss der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gibt man ein organisches Lösungsmittel, z.B. Toluol zu und arbeitet die organische Phase wie üblich durch Waschen, Trocknen und Abdestillieren des Lösungsmittels auf.

Die neuen Verbindungen fallen in Form von Ölen an, die sich zum Teil nicht unzersetzt destillieren lassen, jedoch durch sogenanntes ‹Andestillieren›, d.h. durch längeres Erhitzen unter vermindertem Druck auf mässig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit zur Bekämpfung von tierischen Schädlingen, insbesondere Insekten und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blatella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Hereroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus'piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attegenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp..

Aus der Ordnung der Diptera z.B. Aedes spp., Anopheles spp., Culex spp., Drosophila melanogaster, Musca spp., Fannia spp., Calliphora erythrocephala, Lusilia spp., Chrysomyia spp., Cuterebra spp., Gastrophilus spp., Hypobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die erfindungsgemässen Wirkstoffe der Formel (I) zeichnen sich durch eine hervorragende insektizide und nematizide Wirksamkeit aus. Sie zeigen insbesondere beim Einsatz als Bodeninsektizide eine hervorragende Wirkung und eine besonders lange Wirksamkeit gegen Käferlarven wie z.B. Phaedon cochleariae und Blattläusen wie z.B. Myzus persicae.

Die neuen Verbindungen sind also besonders gut für einen Einsatz zur langanhaltenden Bekämpfung von Bodeninsekten und Nematoden geeignet.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoff sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetible Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemässen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemässen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe geteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten natürlichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Beispiel A

Laphygma-Test

| | |
|---|---|
| Lösungsmittel: | 3 Gewichtsteile Aceton |
| Emulgator: | 1 Gewichtsteil Alkylarylpolyglykolether |

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Laphygma frugiperda) besetzt, solange die Blätter noch feucht sind.

Nach der gewünschten Zeit wird die Abtötung in % bestimmt. Dabei bedeutet 100%, dass alle Raupen abgetötet wurden; 0% bedeutet, dass keine Raupen abgtötet wurden.

Bei diesem Test zeigten z.B. die folgenden Verbindungen der Herstellungsbeispiele (1) und (2) bei einer Wirkstoffkonzentration von 0,01% nach 3 Tagen eine Abtötung von 100%.

Beispiel B

Grenzkonzentrations-Test/Nematoden

| | |
|---|---|
| Testnematode: | Meloidogyne incognita |
| Lösungsmittel: | 3 Gewichtsteile Aceton |
| Emulgator: | 1 Gewichtsteil Alkylarylpolyglykolether |

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18 °C.

Nach sechs Wochen werden die Kartoffelnwurzeln auf Zysten untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Bei diesem Test zeigten z.B. die folgenden Verbindungen der Herstellungsbeispiele (1) und (2) bei einer Wirkstoffkonzentration von 20 ppm eine Abtötung von 100%.

Beispiel C

Grenzkonzentrations-Test/Wurzelsystemische Wirkung

| | |
|---|---|
| Testinsekt: | Phaedon cochleariae |
| Lösungsmittel: | 3 Gewichtsteile Aceton |
| Emulgator: | 1 Gewichtsteil Alkylarylpolyglykolether |

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschliesslich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigten z.B. die folgenden Verbindungen der Herstellungsbeispiele (1) und (2) bei einer Wirkstoffkonzentration von 5 ppm eine Abtötung von 100%.

Beispiel D

Grenzkonzentrations-Test/Wurzelsystemische Wirkung

| | |
|---|---|
| Testinsekt: | Myzus persicae |
| Lösungsmittel: | 3 Gewichtsteile Aceton |
| Emulgator: | 1 Gewichtsteil Alkylarylpolyglykolether |

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl

(Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschliesslich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigten z. B. die folgenden Verbindungen der Herstellungsbeispiele (1) und (2) bei einer Wirkstoffkonzentration von 5 ppm eine Abtötung von 100%.

Beispiel E

Grenzkonzentrations-Test/Bodeninsekten

Testinsekt: Phorbia antiqua-Maden (im Boden)

Lösungsmittel: 3 Gewichtsteile Aceton

Emulgator: 1 Gewichtsteil Alkylarylpolyglykolether

Zur Herstellung eine zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und lässt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100%, wenn alle Testinsekten abgetötet worden sind, er ist 0%, wenn noch genau so viele Testinsekten leben wie bei der unbehandelten Kontrolle.

Bei diesem Test zeigten z. B. die folgenden Verbindungen der Herstellungsbeispiele (1) und (2) bei einer Wirkstoffkonzentration von 5 ppm eine Abtötung von 100%.

Herstellungsbeispiele

Beispiel 1

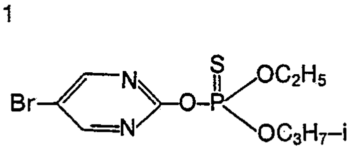

Eine Mischung aus 17,5 g (0,1 Mol) 2-Hydroxy-5-brom-pyrimidin (Herstellung vgl. DE-OS 2 507 702), 20,7 g (0,15 Mol) Kaliumcarbonat, 20,2 g (0,1 Mol) O-Ethyl-O-i-propyl-thionophosphorsäurediesterchlorid und 300 ml Acetonitril wird 23 Stunden bei 50 °C gerührt. Dann wird auf 20 °C abgekühlt, mit 400 ml Toluol versetzt und zweimal mit je 200 ml Wasser geschüttelt. Die organische Phase wird abgetrennt, über Natriumsulfat getrocknet und im Vakuum eingedampft. Nach Andestillieren bei 80 °C im Hochvakuum bleiben 12,8 g (38% der Theorie) O-Ethyl-O-i-propyl-O-(5-brom-pyrimidin-2-yl)-thionophosphorsäureester in Form eines hellbraunen Öles mit dem Brechungsindex $n_D^{21}$: 1,5182 zurück.

Analog Beispiel 1 können die folgenden Verbindungen der Formel (I) hergestellt werden:

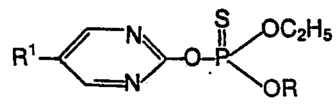
(I)

Tabelle 1

| Beisp.-Nr. | R | $R^1$ | Brechungsindex |
|---|---|---|---|
| 2 | $C_3H_7$–i | H | $n_D^{21}$: 1,5028 |
| 3 | $C_4H_9$–sec. | Br | $n_D^{20}$: 1,5159 |
| 4 | $C_3H_7$–i | Cl | |
| 5 | $C_4H_9$–sec. | H | $n_D^{20}$: 1,4956 |
| 6 | $C_4H_9$–sec. | Cl | |
| 7 | $C_3H_7$–i | F | $n_D^{23}$: 1,4919 |
| 8 | $C_4H_9$–sec. | F | |

**Patentansprüche**

1. Verbindungen der allgemeinen Formel (I)

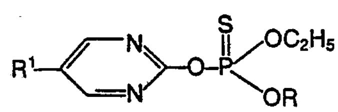
(I)

in welcher

R für i-Propyl oder sec.-Butyl steht und

$R^1$ für Wasserstoff oder Halogen steht.

2. Verbindungen der Formel (I) gemäss Anspruch 1, in welcher

R für i-Propyl oder sec.-Butyl steht und

$R^1$ für Wasserstoff, Fluor, Chlor oder Brom steht.

3. Verbindungen der Formel (I) gemäss Anspruch 1, in welcher

R für i-Propyl oder sec.-Butyl steht und

$R^1$ für Wasserstoff, Fluor oder Brom steht.

4. Verbindung der Formel

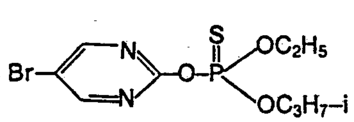

und

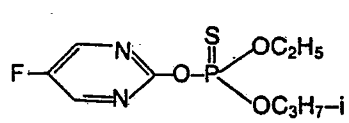

5. Verbindung der Formel

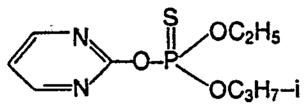

6. Verfahren zur Herstellung von Verbindungen der allgemeinen Formel (I)

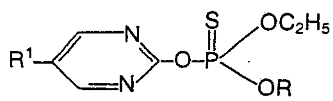
(I)

in welcher
R für i-Propyl oder sec.-Butyl steht und
$R^1$ für Wasserstoff oder Halogen steht,
dadurch gekennzeichnet, dass man 2-Hydroxypyrimidine der Formel (II),

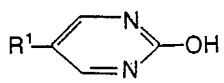
(II)

in welcher
$R^1$ die oben angegebene Bedeutung hat,
oder die entsprechenden Alkalimetall-, Erdalkalimetall- oder Ammoniumsalze mit Halogeniden der Formel (III),

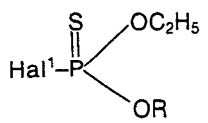
(III)

in welcher
R die oben angegebene Bedeutung hat und
$Hal^1$ für Halogen, wie Chlor oder Brom steht,
gegebenenfalls in Gegenwart eines Säureakzeptors und gegebenenfalls in Gegenwart eines Verdünnungsmittels umsetzt.

7. Schädlingsbekämpfungsmittel, gekennzeichnet durch einen Gehalt an mindestens einer Verbindung der Formel (I) gemäss Anspruch 1 oder 6.

8. Verwendung von Verbindungen der Formel (I) gemäss Anspruch 1 oder 6 zur Bekämpfung von Schädlingen, insbesondere Insekten und Nematoden.

9.Verfahren zur Bekämpfung von Schädlingen, dadurch gekennzeichnet, dass man Verbindungen der Formel (I) gemäss Anspruch 1 oder 6 auf die Schädlinge, vorzugsweise Insekten und Nematoden oder ihren Lebensraum einwirken lässt.

10. Verfahren zur Herstellung von Schädlingsbekämpfungsmitteln, dadurch gekennzeichnet, dass man Verbindungen der Formel (I) gemäss Anspruch 1 oder 6 mit Streckmitteln und/oder oberflächenaktiven Mitteln vermischt.

**Claims**

1. Compounds of the general formula (I)

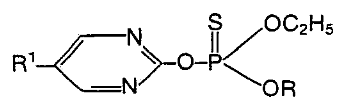
(I)

in which
R represents i-propyl or sec.-butyl and
$R^1$ represents hydrogen or halogen.

2. Compounds of the formula (I) according to Claim 1, in which
R represents i-propyl or sec.-butyl and
$R^1$ represents hydrogen, fluorine, chlorine or bromine.

3. Compounds of the formula (I) according to Claim 1, in which
R represents i-propyl or sec.-butyl and
$R^1$ represents hydrogen, fluorine or bromine.

4. Compound of the formula

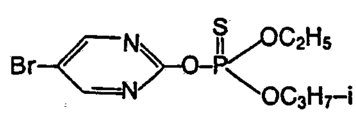
and
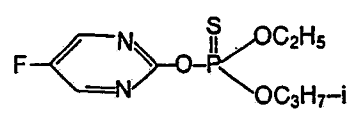

5. Compound of the formula

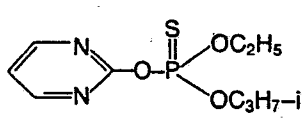

6. Process for the preparation of compounds of the general formula (I)

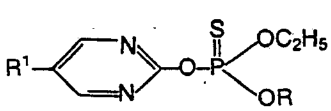
(I)

in which
R represents i-propyl or sec.-butyl and
$R^1$ represents hydrogen or halogen,
characterised in that 2-hydroxypyrimidines of the formula (II)

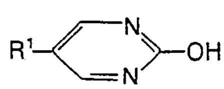
(II)

in which
$R^1$ has the abovementioned meaning,
or the corresponding alkali metal, alkaline earth metal or ammonium salts, are reacted with halides of the formula (III)

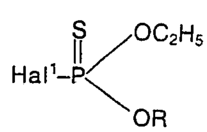
(III)

in which
R has the abovementioned meaning and
$Hal^1$ represents halogen, such as chlorine or bromine,

if appropriate in the presence of an acid acceptor and if appropriate in the presence of a diluent.

7. Agents for combating pests, characterised in that they contain at least one compound of the formula (I) according to Claim 1 or 6.

8. Use of compounds of the formula (I) according to Claim 1 or 6 for combating pests, in particular insects and nematodes.

9. Method of combating pests, characterised in that compounds of the formula (I) according to Claim 1 or 6 are allowed to act on the pests, preferably insects and nematodes, or their environment.

10. Process for the preparation of agents for combating pests, characterised in that compounds of the formula (I) according to Claim 1 or 6 are mixed with extenders and/or surface-active agents.

**Revendications**

1. Composés de formule générale (I):

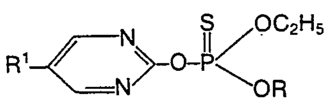
(I)

dans laquelle

R représente le radical i-propyle ou le radical sec-butyle, et

$R^1$ représente l'atome d'hydrogène ou un atome d'halogène.

2. Composés de formule (I) selon la revendication 1, formule dans laquelle

R représente le radical i-propyle ou le radical sec-butyle, et

$R^1$ représente l'atome d'hydrogène, l'atome de fluor, l'atome de chlore ou l'atome de brome.

3. Composés de formule (I) selon la revendication 1, formule dans laquelle

R représente le radical i-propyle ou le radical sec-butyle, et

$R^1$ représente l'atome d'hydrogène, l'atome de fluor ou l'atome de brome.

4. Composé de formule:

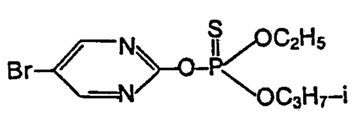
et

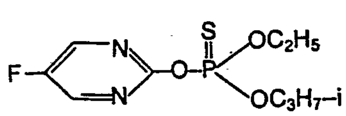

5. Composé de formule:

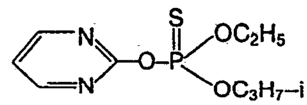

6. Procédé de préparation de composés de formule générale (I):

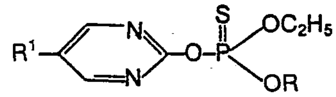
(I)

dans laquelle

R représente le radical i-propyle ou le radical sec-butyle, et

$R^1$ représente l'atome d'hydrogène ou un atome d'halogène,

caractérisé en ce qu'on fait réagir des 2-hydroxypyrimidines de formule (II):

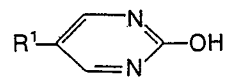
(II)

dans laquelle

$R^1$ a la signification indiquée ci-dessus, ou les sels correspondants de métaux alcalins, de métaux alcalino-terreux ou d'ammonium, avec des halogénures de formule (III):

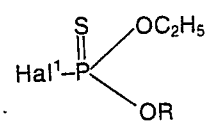
(III)

dans laquelle

R a la signification indiquée ci-dessus, et

$Hal^1$ représente un atome d'halogène tel que l'atome de chlore ou l'atome de brome,

éventuellement en présence d'un accepteur d'acide et éventuellement en présence d'un diluant.

7. Agent parasiticide, caractérisé en ce qu'il contient au moins un composé de formule (I) selon la revendication 1 ou 6.

8. Utilisation de composés de formule (I) selon la revendication 1 ou 6, en vue de combattre les parasites, en particulier, les insectes et les nématodes.

9. Procédé en vue de combattre les parasites, caractérisé en ce qu'on fait agir des composés de formule (I) selon la revendication 1 ou 6 sur les parasites, de préférence, sur les insectes et les nématodes ou leur biotope.

10. Procédé de préparation d'agents parasiticides, caractérisé en ce qu'on mélange des composés de formule (I) selon la revendication 1 ou 6 avec des diluants et/ou des agents tensio-actifs.